# EUROPÄISCHE PATENTSCHRIFT

(11) **EP 3 280 609 B1**
(45) Veröffentlichungstag und Bekanntmachung des Hinweises auf die Patenterteilung: **09.12.2020**
(21) Anmeldenummer: 16712934.5
(22) Anmeldetag: 01.04.2016
(51) Int. Cl.: B60N 2/02, B60N 2/06, B60N 2/07, B60N 2/08, B60N 2/12, B60N 2/20

(54) **LÄNGSEINSTELLER FÜR EINEN FAHRZEUGSITZ**
LONGITUDINAL ADJUSTMENT MECHANISM FOR A VEHICLE SEAT
DISPOSITIF DE RÉGLAGE LONGITUDINAL POUR SIÈGE DE VÉHICULE

(30) Priorität: 07.04.2015 DE 102015206162
(43) Veröffentlichungstag der Anmeldung: 14.02.2018
(73) Patentinhaber: Adient Luxembourg Holding S.à r.l., 1855 Luxembourg (LU)
(72) Erfinder: UTZINGER, Karl, 66919 Weselberg (DE); ZACHARIAS, Michael, 42799 Leichlingen (DE)
(74) Vertreter: Liedhegener, Ralf
(86) Internationale Anmeldenummer: PCT/EP2016/057205
(87) Internationale Veröffentlichungsnummer: WO 2016/162276

(56) Entgegenhaltungen:
- WO-A1-03/062012
- WO-A1-2014/055083
- WO-A2-2013/147846

## Beschreibung

Die Erfindung betrifft einen Längseinsteller für einen Fahrzeugsitz mit den Merkmalen des Oberbegriffs des Anspruchs 1, sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 102 02 179 A1, sowie der hieraus hervorgegangenen WO 03/053012 A1, ist allgemein ein gattungsgemäßer Längseinsteller für einen Fahrzeugsitz bekannt, welcher eine Memory-Vorrichtung zur Erfassung einer relativen Sitzlängsverschiebung aufweist. Die Memory-Vorrichtung ist hierbei in einem inneren, zwischen einer ersten Sitzschiene und einer zweiten Sitzschiene gebildeten, Bauraum angeordnet und mit der ersten Sitzschiene verbunden. Die Memory-Vorrichtung weist ein mit der zweiten Sitzschiene in Eingriff bringbares Sperrelement auf, welches im Falle einer Betätigung der Sperrfunktion sämtliche auf das Sperrelement wirkenden Kräfte in die Memory-Vorrichtung einleitet.

Aus der WO 2014/055083 A1 ist eine Führungsbahn-Anordnung bekannt, enthaltend eine Memory-Anordnung, die in einen Eingriffszustand versetzt werden kann, um eine von einem Benutzer gewählte Position einzustellen. Wenn sich die Memory-Anordnung in einem Eingriffszustand und an der von einem Benutzer gewählten Position befindet, setzt die Memory-Anordnung Bewegung einer ersten Schiene relativ zu einer zweiten Schiene in einer Rückwärts-Richtung Widerstand entgegen. Wenn sich die Memory-Anordnung in dem Eingriffszustand und an der von einem Benutzer gewählten Position befindet und sich die zweite Schiene relativ zu der ersten Schiene in einer Vorwärts-Richtung bewegt, wird die Memory-Anordnung in der Rückwärts-Richtung relativ zu der zweiten Schiene an eine erste Position verschoben.

### Aufgabe

Der Erfindung liegt die Aufgabe zu Grunde, einen Längseinsteller der eingangs genannten Art zu verbessern, insbesondere einen Längseinsteller mit einer bedarfsweisen Betätigung eines Sperrelements von oben oder unten her zu ermöglichen sowie einen entsprechenden Fahrzeugsitz bereitzustellen.

### Lösung

Diese Aufgabe wird erfindungsgemäß durch einen Längseinsteller mit den Merkmalen des Anspruchs 1 gelöst. Die Aufgabe wird ferner durch einen Fahrzeugsitz mit den Merkmalen des Anspruchs 13 gelöst.

Ein Längseinsteller für einen Fahrzeugsitz mit einer ersten Sitzschiene, einer zweiten Sitzschiene, relativ zu welcher die erste Sitzschiene in Längsrichtung verschiebbar ist, weist eine der ersten Sitzschiene zugeordneten und mit der zweiten Sitzschiene zusammenwirkende Memory-Vorrichtung auf, welche eine eingestellte Sitzlängsposition speichert, die durch eine vorgenommene Längsverschiebung des Fahrzeugsitzes verlassen und wieder eingenommen wird. Ferner sind ein mit der zweiten Sitzschiene in Wirkverbindung bringbares Getriebe und ein relativ zu dem Getriebe beweglicher Betätigungsarm vorgesehen, wobei das Getriebe spätestens bei Erreichen der gespeicherten Sitzlängsposition ein Steuermoment auf den Betätigungsarm ausübt, aufgrund dessen der Betätigungsarm wenigstens ein in der ersten Sitzschiene geführtes, mit der zweiten Sitzschiene zusammenwirkendes, Sperrelement ansteuert. Allgemein weist der Längseinsteller zusätzlich wenigstens ein von dem Sperrelement zu unterscheidendes weiteres Verriegelungselement auf, welches dazu eingerichtet ist, die sitzteilfeste erste Sitzschiene in Bezug auf die strukturfeste zweite Sitzschiene zu verriegeln. Zur genaueren Unterscheidung sei darauf hingewiesen, dass das Sperrelement lediglich zur Blockierung einer Bewegung der ersten Sitzschiene relativ zur zweiten Sitzschiene beim Erreichen der gespeicherten Memory-Position eingerichtet ist, während das Verriegelungselement in an sich bekannter Weiser einer Einstellung einer Sitzlängsposition dient und zur Aufnahme von bei einem Frontalaufprall auftretenden Kräften eingerichtet ist.

Beim Erreichen der gespeicherten Memory-Position erfolgt eine Blockierung der ersten Sitzschiene in der zweiten Sitzschiene mittels des Sperrelements. Zum Betätigen des Sperrelements weist die Memory-Vorrichtung einen mit dem Getriebe wirkverbundenen und relativ zu dem Getriebe beweglichen Betätigungsarm auf. Spätestens bei Erreichen der gespeicherten Sitzlängsposition übt das Getriebe ein Steuermoment auf den Betätigungsarm aus, aufgrund dessen der Betätigungsarm das Sperrelement ansteuert. Unter "ansteuern" kann hierbei allgemein verstanden werden, dass mittels einer Bewegung des Betätigungsarmes eine Veränderung der resultierenden auf das Sperrelement wirkenden Kraft erzielt wird, in Folge dessen das Sperrelement bewegt wird.

Vorteilhafte Ausgestaltungen, welche einzeln oder in Kombination miteinander eingesetzt werden können, sind Gegenstand der Unteransprüche.

Das Sperrelement kann in einer Ausnehmung in der ersten Sitzschiene gelagert und geführt sein. Das Sperrelement kann insbesondere in seiner Bewegung in Vertikalrichtung z in der Ausnehmung der ersten Sitzschiene durch einen oberen Anschlag und einen unteren Anschlag begrenzt sein.

Das Sperrelement kann sich ferner mittels einer Rückstellfeder an einem oberen Abschnitt der ersten Sitzschiene abstützen.

Das Sperrelement kann eine Schräge aufweisen. Im Falle einer Vorwärtsbewegung der ersten Sitzschiene relativ zur zweiten Sitzschiene, kann die Schräge mit einer bereichsweise abgerundeten Kontur der Verzahnung zusammenwirken.

Der Betätigungsarm kann von unten her an dem Sperrelement angreifen und dieses in einer nach oben gerichteten Bewegung ansteuern. Die Rückstellfeder kann hierbei als Druckfeder ausgestaltet sein, welche das Sperrelement federbelastet in die Freigabestellung treibt.

Alternativ kann der Betätigungsarm von oben her an dem Sperrelement angreifen und dieses in einer nach unten gerichteten Bewegung ansteuern. Hierbei kann die Rückstellfeder als Zugfeder ausgestaltet sein, welche das Sperrelement federbelastet in die Blockierstellung treibt.

Das Getriebe kann mit einer in einem Bodenbereich der zweiten Sitzschiene angeordneten Zahnstange zusammenwirken. Hierbei kann insbesondere ein erstes Zahnrad des Getriebes mit der Zahnstange zusammenwirken.

Ferner wird die Aufgabe erfindungsgemäß durch einen Fahrzeugsitz mit wenigstens einem Längseinsteller gemäß der vorhergehenden Beschreibung gelöst.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes,
- Fig. 2:: eine Querschnittsdarstellung eines Schienenpaares eines erfindungsgemäßen Längseinstellers,
- Fig. 3:: einen Längsschnitt eines Schienenpaares eines erfindungsgemäßen Längseinstellers entlang der Linie A-A in Fig. 2,
- Fig. 4:: eine perspektivische Darstellung einer möglichen Ausgestaltung einer Memory-Vorrichtung zur Betätigung von unten,
- Fig. 5:: eine perspektivische Darstellung eines Teils des inneren Aufbaus der Memory-Vorrichtung aus Fig. 4,
- Fig. 6:: eine perspektivische Darstellung des inneren Aufbaus der Memory-Vorrichtung aus Fig. 4,
- Fig. 7a:: eine Darstellung in Seitenansicht der Memory-Vorrichtung aus Fig. 4 im Betätigungszustand,
- Fig. 7b:: eine Darstellung in Seitenansicht der Memory-Vorrichtung aus Fig. 4 im Normalzustand,
- Fig. 8a:: eine perspektivische Ansicht einer Explosionsdarstellung der Memory-Vorrichtung von Fig. 5,
- Fig. 8b:: eine weitere perspektivische Ansicht einer Explosionsdarstellung der Memory-Vorrichtung von Fig. 5,
- Fig. 9:: eine ausschnittsweise Darstellung einer Memory-Vorrichtung zur Betätigung von oben in einer zweiten Sitzschiene,
- Fig. 10:: eine perspektivische Darstellung einer möglichen Ausgestaltung einer Memory-Vorrichtung zur Betätigung von oben,
- Fig. 11:: eine Darstellung in Seitenansicht der Memory-Vorrichtung aus Fig. 10 im Normalzustand,
- Fig. 12:: eine Darstellung in einer Ansicht von oben auf die Memory-Vorrichtung aus Fig. 10,
- Fig. 13:: eine perspektivische Darstellung des inneren Aufbaus der Memory-Vorrichtung aus Fig. 10 ohne Gehäuse,
- Fig. 14:: eine Darstellung in Seitenansicht der Memory-Vorrichtung aus Fig. 10 ohne Gehäuse ,
- Fig. 15a:: eine perspektivische Ansicht einer Explosionsdarstellung der Memory-Vorrichtung von Fig. 10,
- Fig. 15b:: eine weitere perspektivische Ansicht einer Explosionsdarstellung der Memory-Vorrichtung von Fig. 10,
- Fig. 16:: eine Darstellung der Memory-Vorrichtung von Fig. 10 in einer Ansicht von oben,und
- Fig. 17a bis Fig. 17e:: diverse Schnittdarstellungen der Memory-Vorrichtung von Fig. 16 entlang der Linie A-A, in verschiedenen aufeinanderfolgenden Zuständen während des Verschiebens der ersten Sitzschiene.

Die Zeichnungen werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne und wie üblich in Fahrtrichtung ausgerichtet ist. Der Fahrzeugsitz 1 kann jedoch auch in abweichender Ausrichtung, beispielsweise quer zur Fahrtrichtung verbaut werden.

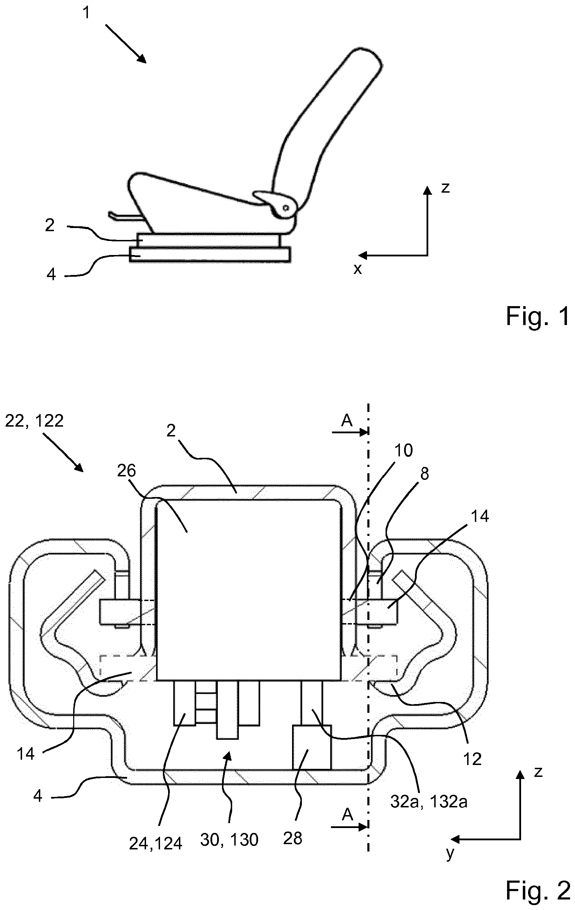

Der in Fig. 1 gezeigte Fahrzeugsitz 1 ist in einer Gebrauchsstellung mit aufgerichteter Lehne 3 auf einem Längseinsteller montiert. Der Längseinsteller weist eine erste Sitzschiene 2 und eine zweite Sitzschiene 4 auf, relativ zu welcher die erste Sitzschiene 2 in Längsrichtung verschiebbar ist. Der Fahrzeugsitz 1 ist hierbei mit der ersten Sitzschiene 2 fest verbunden. Die zweite Sitzschiene 4 ist üblicher Weise mit einem nicht dargestellten Fahrzeugboden und/oder einer Fahrzeugstruktur verbunden. Der Fahrzeugsitz 1 ist zusammen mit der sitzfesten, ersten Sitzschiene 2 relativ zu der strukturfesten, zweiten Sitzschiene 4 in Längsrichtung x verschiebbar. Vorzugsweise weist der Fahrzeugsitz 1 zwei im Wesentlichen symmetrisch zu einer Mittelebene, die senkrecht zur Querrichtung y verläuft, angeordnete Längseinsteller auf.

In Fig. 2 ist eine Querschnittsdarstellung eines erfindungsgemäßen Längseinstellers dargestellt. Fig. 2 zeigt eine der ersten Sitzschiene 2 zugeordnete und mit der zweiten Sitzschiene 4 zusammenwirkende Memory-Vorrichtung 22, 122, welche eingerichtet ist, eine eingestellte Sitzlängsposition zu speichern, welche durch eine vorgenommene Längsverschiebung des Fahrzeugsitzes 1 verlassen und wieder eingenommen werden kann. Die Memory-Vorrichtung 22 ist mit der ersten Sitzschiene 2, bevorzugt mittels einer Schraubverbindung zwischen dem Gehäuse 26 und der ersten Sitzschiene 2, verbunden.

Hierbei wirkt ein in einem Gehäuse 26 der Memory-Vorrichtung 22, 122 angeordnetes Getriebe 30, 130, insbesondere ein erstes Zahnrad 32a, 132a des Getriebes 30, 130, mit einer in einem Bodenbereich der strukturfesten, zweiten Sitzschiene 4 angeordneten Zahnstange 28 zusammen.

In Fig. 2 ist ebenfalls ein Sperrelement 14 gezeigt, welches zwischen einer Blockierstellung, in welcher das Sperrelement 14 wie dargestellt in Eingriff mit einer Verzahnung 8 der zweiten Sitzschiene 4 ist, und einer Freigabestellung, in welcher das Sperrelement 14 (gestrichelt dargestellt) außer Eingriff mit der zweiten Sitzschiene 4 ist, bewegbar ist. Das Sperrelement 14 ist vorliegend in einer vorgesehenen Ausnehmung 6 in der ersten Sitzschiene 2 gelagert und geführt. Das Sperrelement 14 ist in seiner Bewegung in Vertikalrichtung z in der Ausnehmung 6 der ersten Sitzschiene 2 durch einen oberen Anschlag 10 und einen unteren Anschlag 12 begrenzt. Hierbei stützt sich das Sperrelement 14 mittels einer Rückstellfeder 18 (aus darstellungstechnischen Gründen nicht zu sehen) an einem oberen Abschnitt der ersten Sitzschiene 2 ab. Die Rückstellfeder 18 kann hierbei insbesondere als Druckfeder oder als Zugfeder ausgestaltet sein, je nachdem ob das Sperrelement 14 federbelastet die Blockierstellung oder die Freigabestellung einnehmen soll.

Zum Betätigen des Sperrelements 14 weist die Memory-Vorrichtung 22, 122 einen mit dem Getriebe 30, 130 wirkverbundenen und relativ zu dem Getriebe beweglichen Betätigungsarm 24, 124 auf. Spätestens beim Erreichen der gespeicherten Sitzlängsposition übt das Getriebe 30, 130 ein Steuermoment auf den Betätigungsarm 24, 124 aus, aufgrund dessen der Betätigungsarm 24, 124 das Sperrelement 14 ansteuert. Unter "ansteuern" kann hierbei allgemein verstanden werden, dass mittels einer Bewegung des Betätigungsarmes 24, 124 eine Veränderung der resultierenden, auf das Sperrelement 14 wirkenden Kraft erzielt wird.

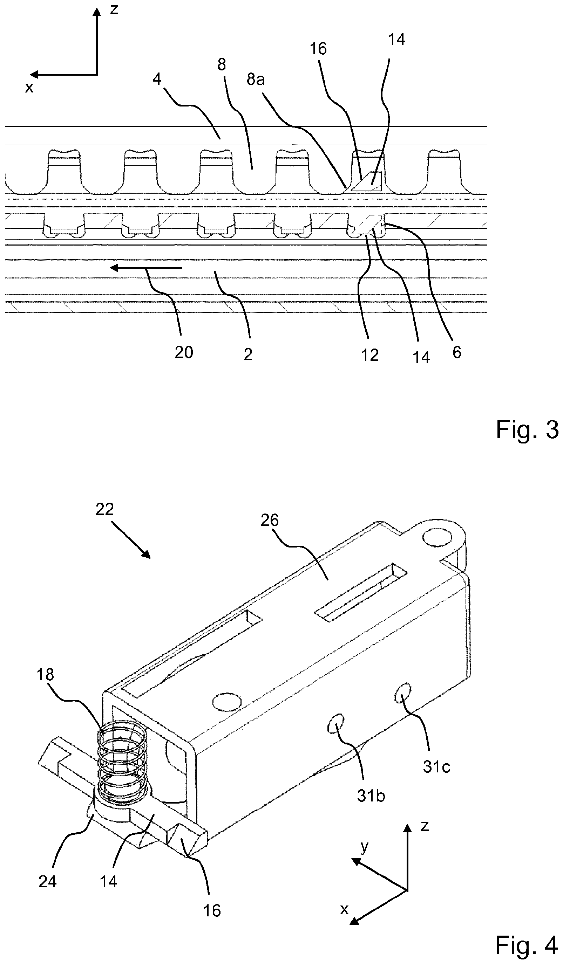

Fig. 3 zeigt einen Längsschnitt eines Schienenpaares eines erfindungsgemäßen Längseinstellers. Wie in Fig. 3 dargestellt, weist die zweite Sitzschiene 4 eine Verzahnung 8 auf, mit welcher das Sperrelement 14 in Eingriff bringbar ist. Das Sperrelement 14 befindet sich gemäß der Darstellung von Fig. 3 in der Blockierstellung, das bedeutet in Eingriff mit der Verzahnung 8 der zweiten Sitzschiene 4. Die Freigabestellung des Sperrelements 14, in welcher sich das Sperrelement 14 in der Ausnehmung 6 der ersten Sitzschiene 2 außer Eingriff mit der Verzahnung 8 der zweiten Sitzschiene 4 befindet, ist gestrichelt dargestellt. Wenn das Sperrelement 14 in der Freigabestellung gehalten ist, liegt es bevorzugt an einem unteren Anschlag 12 an, wobei der untere Anschlag 12 dem in Einbaurichtung der ersten Sitzschiene 2 einer unteren Begrenzung der Ausnehmung 6 entspricht, in welcher das Sperrelement 14 geführt ist.

Ferner ist in Fig. 3 gezeigt, dass das Sperrelement 14 eine Schräge 16 aufweist, diese Schräge 16 dient der leichteren Aussteuerbarkeit des Sperrelements 14 aus der Verzahnung 8 der zweiten Sitzschiene 4. Hierbei wirkt die Schräge 16, im Falle einer durch den Pfeil 20 angedeuteten Vorwärtsbewegung der ersten Sitzschiene 2 relativ zur zweiten Sitzschiene 4, mit der bereichsweise abgerundeten Kontur 8a der Verzahnung 8 zusammen, so dass das Sperrelement 14 zum Beginn der Vorwärtsbewegung auf diese Weise aus der Verzahnung 8 ausgetrieben wird, bevor ein entsprechende Bewegung des Sperrelements 14 durch einen Betätigungsarm 24, 124 einer Memory-Vorrichtung 22, 122 bewirkt werden kann.

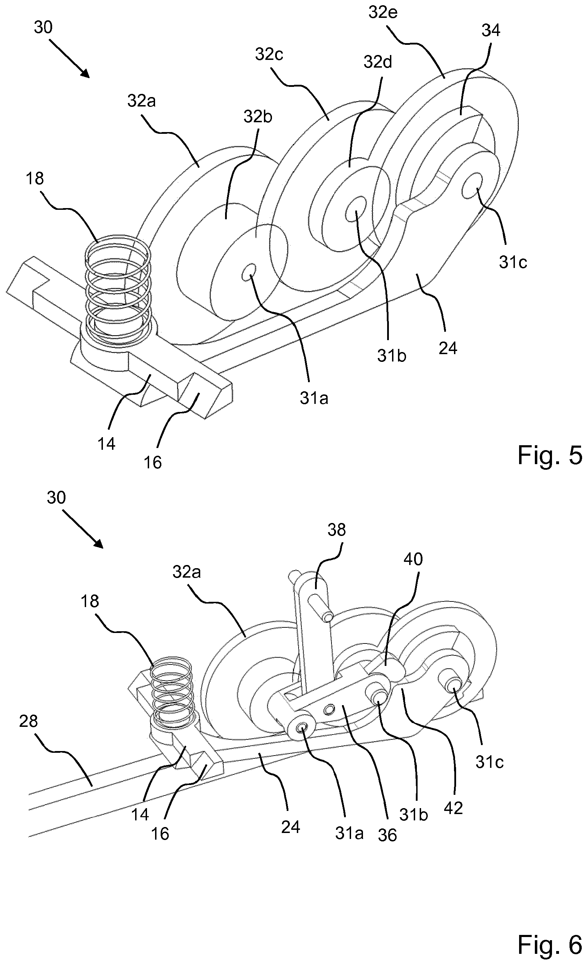

Fig. 4 zeigt eine perspektivische Darstellung einer ersten möglichen Ausgestaltung einer Memory-Vorrichtung 22 zur Betätigung von unten. Fig. 4 zeigt, dass das Gehäuse 26 in Richtung des Sperrelements 14 offen ausgestaltet ist, so dass der Betätigungsarm 24 von unten her an dem Sperrelement 14 angreifen und dieses in einer nach oben gerichteten Bewegung ansteuern kann. Die Betätigung von unten entspricht der Ausgestaltung der Rückstellfeder 18 als Druckfeder, welche das Sperrelement 14 federbelastet in die Freigabestellung treibt und das Sperrelement 14 durch die Betätigung mittels des Betätigungsarms 24 entgegen der Kraft der Rückstellfeder 18 in die Blockierstellung bringbar ist. Ferner ist in dieser Darstellung eine im Gehäuse 26 gelagerte zweite Achse 31b und dritte Achse 31c gezeigt, welche nachfolgend anhand der Figuren 5 und 6 näher beschrieben werden.

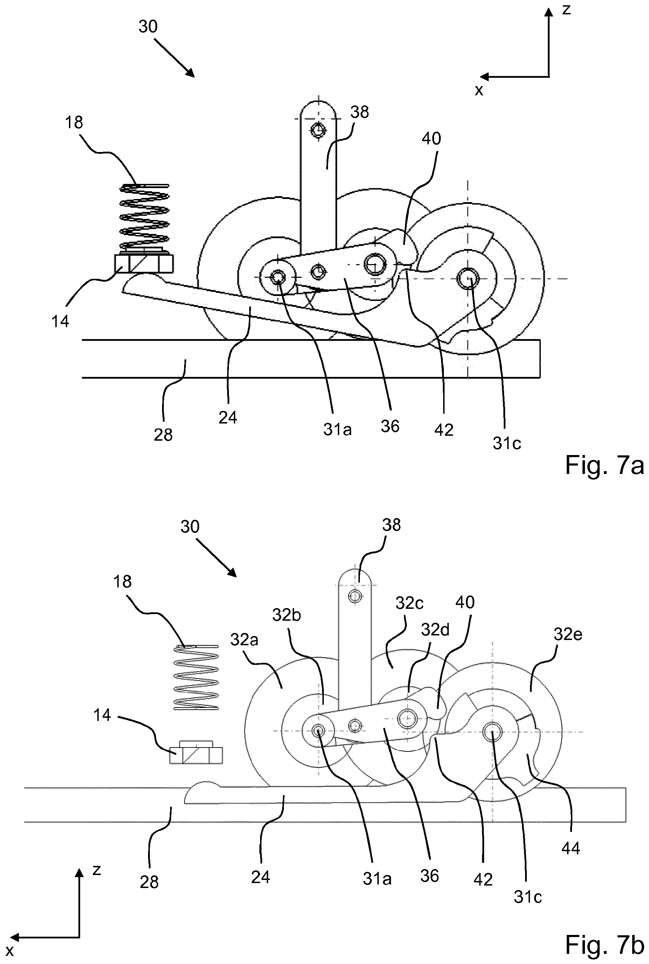

Die Figuren 5 und 6 zeigen perspektivische Darstellungen des inneren Aufbaus der Memory-Vorrichtung 22 aus Fig. 4, insbesondere eines Getriebes 30. In den Figuren 7a und 7b ist eine Seitenansicht auf das Getriebe 30 der Memory-Vorrichtung 22 aus Fig. 4 gezeigt, wobei Fig. 7a einem Betätigungszustand und Fig. 7b einem Grundzustand oder einem Ausgangszustand, entspricht. Aufgrund der hohen Übereinstimmung der Darstellungen von Fig. 5, Fig. 6 sowie der Figuren 7a und 7b werden diese nachfolgend gemeinsam beschrieben.

Den Figuren 5 bis 7b ist ein erstes Zahnrad 32a zu entnehmen, welches, zur Erfassung einer Längsverschiebung der in der ersten Sitzschiene 2 angeordneten Memory-Vorrichtung 22 relativ zu einer zweiten Sitzschiene 4, mit der Zahnstange 28 in Eingriff steht. Eine Rotationsbewegung des ersten Zahnrades 32a entspricht demnach der Längsverschiebung. Das erste Zahnrad 32a ist zusammen mit einem zweiten Zahnrad 32b drehfest auf einer ersten Achse 31a angeordnet. Das zweite Zahnrad 32b steht in Eingriff mit dem dritten Zahnrad 32c. In gleicher Weise ist das dritte Zahnrad 32c zusammen mit dem vierten Zahnrad 32d drehfest auf einer zweiten Achse 31b angeordnet. Das vierte Zahnrad 32d steht in Eingriff mit dem fünften Zahnrad 32e, welches auf der dritten Achse 31c gelagert ist.

Die Radien des ersten Zahnrades 32a, des zweiten Zahnrades 32b, des dritten Zahnrades 32c, des vierten Zahnrades 32d und des fünften Zahnrades 32e sind derart gewählt, dass eine stufenweise Untersetzung der Rotationsbewegung des ersten Zahnrades 32a erfolgt, so dass entsprechend einer maximal möglichen Längsverschiebung das fünfte Zahnrad 32e maximal eine volle Umdrehung, bevorzugt etwas weniger als eine volle Umdrehung, ausführt. Das erste Zahnrad 32a weist hierbei einen größeren Radius als das zweite Zahnrad 32b auf. Das zweite Zahnrad 32b weist ferner einen kleineren Radius als das dritte Zahnrad 32c auf. Das dritte Zahnrad 32c weist einen größeren Radius als das vierte Zahnrad 32d auf. Das vierte Zahnrad 32d weist einen kleineren Radius als das fünfte Zahnrad 32e auf.

Ferner dient die dritte Achse 31c zu Lagerung einer Mitnehmerscheibe 34 sowie des Betätigungsarms 24.

Die zweite Achse 31b und die dritte Achse 31c sind in vorgesehenen Lagerungen im Gehäuse 26 der Memory-Vorrichtung 22 gelagert. Das erste Achse 31a ist an einem Ende der Schwinge 36 gelagert, welche wiederum auf der zweiten Achse 31b gelagert ist. Auf der zweiten Achse 31b ist ferner ein mit der Schwinge 36 in Verbindung stehender Hebel 40 angeordnet. Die Schwinge 36 ist weiter mit einer Zugstange 38 verbunden, welche dazu dient, eine Längseinstellung des Fahrzeugsitzes 1 in eine neue zu speichernde Sitzlängsposition zu ermöglichen. Dies erfolgt dadurch, dass die Zugstange 38 die Schwinge 36 um die zweite Achse 31b verschwenkt und hierbei das erst Zahnrad 32a von der Zahnstange 28 abgehoben wird. Aufgrund des verlorenen Kontakts zwischen erstem Zahnrad 32a und Zahnstange 28 kann die Memory-Vorrichtung 22 keine Längsverschiebung mehr erfassen. Dies ist erst wieder der Fall, wenn die Zugstange 38 und dementsprechend das erste Zahnrad 32a abgesenkt werden. Ferner ist zur Bereitstellung einer sogenannten Reset-Funktion, mittels welcher das Getriebe 30 wieder in den Ausgangszustand bringbar ist, eine nicht dargestellte Reset-Feder vorgesehen. Die Reset-Feder greift hierzu beispielsweise an einem der Zahnräder 32a bis 32e, vorzugsweise an einem der Zahnräder 32a, 32c, 32e, an und dreht das Getriebe 30 sowie die mit dem Getriebe 30 verbundene Mitnehmerscheibe 34 in die Stellung zurück, welche das Getriebe 30 und die Mitnehmerscheibe 34 in der gespeicherten Sitzlängsposition aufweisen. Die Reset-Feder kann beispielsweise in Form einer Spiralfeder ausgestaltet sein. Die Reset-Feder stützt sich bevorzugt zwischen einem zuvor genannten Zahnrad 32a bis 32e und an einem gehäusefesten Abschnitt ab. Die Reset-Feder wird bevorzugt bei einem Verschieben der ersten Sitzschiene 2 von der Drehung des entsprechenden Zahnrades 32a bis 32e vorgespannt. Wenn anschließend das Getriebe 30 durch Anheben des ersten Zahnrades 32a mittels der Zugstange 38 außer Eingriff mit der Zahnstange 28 in den Freilauf gebracht wird, bewirkt ein Entspannen der vorgespannten Reset-Feder ein Rückstellen des Getriebes 30, anders ausgedrückt bewirkt es einen Reset des Getriebes 30.

Weiterhin bewirkt ein Betätigen der Zugstange 38 zusammen mit dem Verschwenken der Schwinge 36 ein Verschwenken des Hebels 40 um die zweite Achse 31b, wodurch der Hebel 40 auf eine kooperierende Kontur 42 des Betätigungsarms 24 wirkt. Hierdurch wird der Betätigungsarm 24 mit seinem dem Sperrelement 14 zugewandten freien Ende nach unten von dem Sperrelement 14 weg verschwenkt, insbesondere um einer Bewegung des federbelasteten Sperrelements 14 in die Freigabestellung nicht entgegen zu wirken. Eine Betätigung der Zugstange 28 ist bevorzugt mittels eines bekannten Sitzlängsverstell-Mechanismus realisiert.

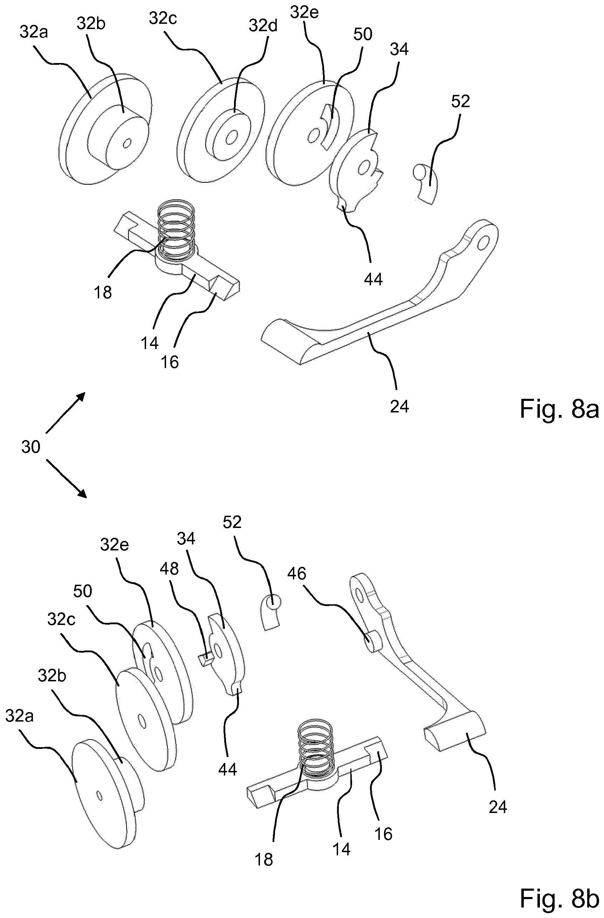

Die Figuren 8a und 8b zeigt jeweils eine perspektivische Ansicht einer Explosionsdarstellung der Memory-Vorrichtung 22 von Fig. 5 aus unterschiedlichen Blickwinkeln. Ergänzend zu der vorherigen Beschreibung der unterschiedlichen Bestandteile der Memory-Vorrichtung 22 sei nunmehr ergänzend erläutert, dass die Mitnehmerscheibe 34 auf ihrer dem fünften Zahnrad 32e zugewandten Oberfläche einen Vorsprung 48 aufweist, welcher mit einer in dem fünften Zahnrad 32e vorgesehenen Ausnehmung 50 in Eingriff ist. Ferner ist ein Federelement 52 vorgesehen, welches sich in der Ausnehmung 50 in Umfangsrichtung zwischen dem Vorsprung 48 der Mitnehmerscheibe 34 und einer dem Vorsprung 48 gegenüberliegenden Begrenzung der Ausnehmung 50 abstützt. Das Federelement 52 dient, sowohl einer Spielfreistellung zwischen dem fünften Zahnrad 32e und der Mitnehmerscheibe 34, sowie einem Schutz des Getriebes 30, wenn das Sperrelement 14 beim Betätigen auf eine Spitze der Verzahnung 8 auftrifft. Die Mitnehmerscheibe 34 weist zudem im Bereich ihrer äußeren Umfangsfläche eine Kontur 44 auf, welche mit einem vorliegend seitlich an dem Betätigungsarm 24 angeordneten Vorsprung 46 in Wechselwirkung steht, derart, dass der Betätigungsarm 24 von der Mitnehmerscheibe 34 in einer Schwenkbewegung um die dritte Achse 31c zum Betätigen des Sperrelement 14 antreibbar ist.

Entsprechend wird lediglich beim Erreichen der gespeicherten Sitzposition eine Drehung des fünften Zahnrads 32e mittels des Vorsprungs 48 der Mitnehmerscheibe 34 und deren Kontur 44 auf den Vorsprung 46 des Betätigungsarms 24 übertragen, während bei einer vorherigen Drehung des fünften Zahnrads 32e keine kraftübertragende Verbindung zu dem Betätigungsarm 24 besteht.

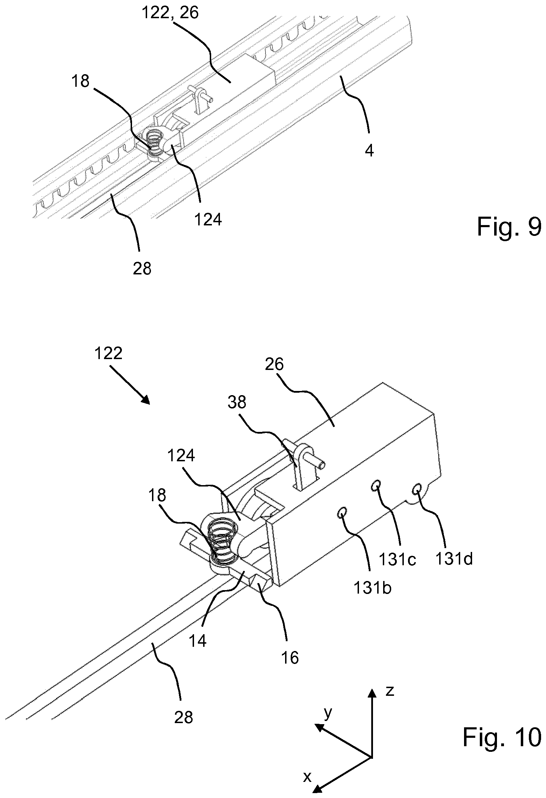

In den Figuren 9 bis 17e ist eine weitere mögliche Ausführungsform des Getriebes 130 der Memory-Vorrichtung 122 zur Betätigung des Sperrelements 14 von oben gezeigt. Das weitere Ausführungsbeispiel entspricht dem ersten Ausführungsbeispiel, soweit nachfolgend nicht abweichend beschrieben. Gleiche oder gleichwirkende Bauteile des ersten und des weiteren Ausführungsbeispiels tragen daher die gleichen Bezugszeichen. Teilweise andersgestaltete Bauteile mit dergleichen Benennung weisen um 100 erhöhte Bezugszeichen auf.

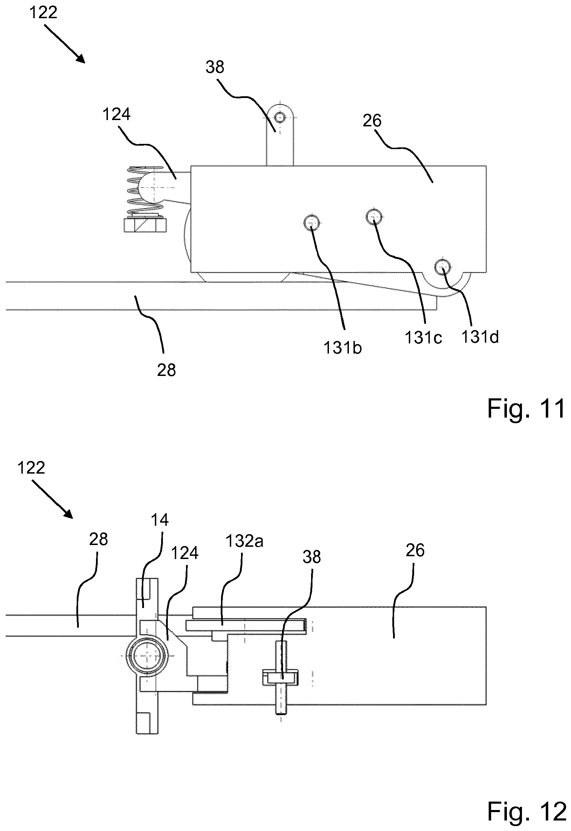

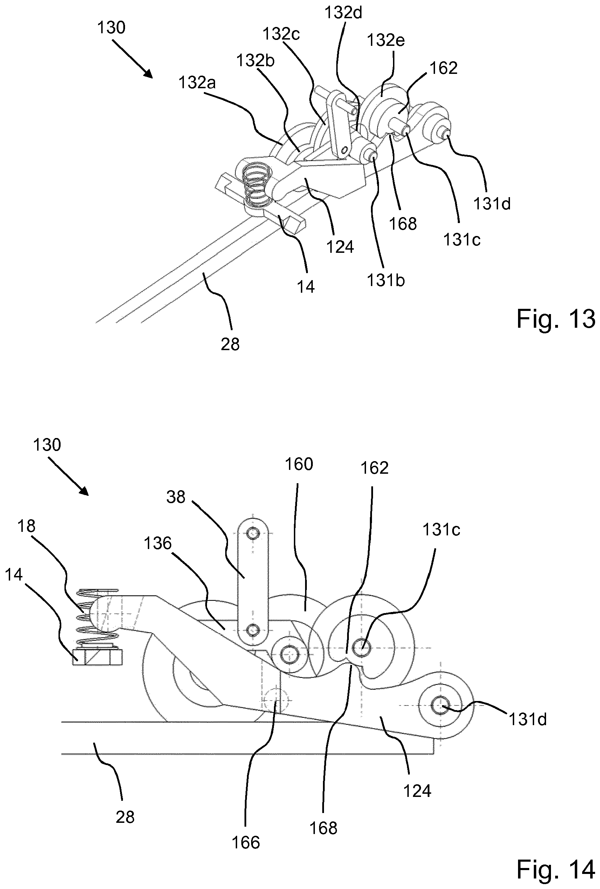

In den Figuren 9 bis 12 ist die weitere Ausführungsform der Memory-Vorrichtung 122 in unterschiedlichen Einbauzuständen und Blickwinkeln dargestellt. Hierbei ist das Gehäuse 26 der Memory-Vorrichtung 122 in Richtung des Sperrelements 14 weiterhin offen ausgestaltet, so dass der Betätigungsarm 124 von oben her an dem Sperrelement 14 angreifen und dieses in einer nach unten gerichteten Bewegung ansteuern kann. Die Betätigung von oben entspricht der Ausgestaltung der Rückstellfeder 18 als Zugfeder, welche das Sperrelement 14 federbelastet in die Blockierstellung treibt und das Sperrelement 14 durch die Betätigung mittels des Betätigungsarms 124 entgegen der Kraft der Rückstellfeder 18 in die Freigabestellung bringbar ist. Ferner ist in dieser Darstellung zusätzlich zu der zweiten Achse 131b und der dritten Achse 131c eine vierte Achse 131d gezeigt, welche nachfolgend anhand der Figuren 11 und 14 näher beschrieben wird.

Die Figuren 13 und 14 zeigen das Getriebe 130 der weiteren Ausführungsform der Memory-Vorrichtung 122 aus Fig. 10. Den Figuren 13 und 14 ist zunächst zu entnehmen, dass der Betätigungsarm 124 an seinem dem Sperrelement 14 gegenüberliegenden Endabschnitt in der vierten Achse 131d gelagert ist. Das Betätigungselement 124 ist um die vierte Achse 131d schwenkbar.

Weiterhin ist der grundlegende Aufbau des Getriebes 130 ähnlich dem Aufbau des Getriebes 30 der ersten Ausführungsform. Hierbei ist ein erstes Zahnrad 132a gezeigt, welches, zur Erfassung einer Längsverschiebung der in der ersten Sitzschiene 2 angeordneten Memory-Vorrichtung 122 relativ zu einer zweiten Sitzschiene 4, mit der Zahnstange 28 in Eingriff steht. Eine Rotationsbewegung des ersten Zahnrades 132a gibt entsprechend eine Längsverschiebung wieder. Das erste Zahnrad 132a ist zusammen mit dem zweiten Zahnrad 132b drehfest auf der ersten Achse 131a angeordnet. Das zweite Zahnrad 132b steht in Eingriff mit dem dritten Zahnrad 132c. In gleicher Weise ist das dritte Zahnrad 132c zusammen mit dem vierten Zahnrad 132d drehfest auf der zweiten Achse 131b angeordnet. Das vierte Zahnrad 132d steht in Eingriff mit dem fünften Zahnrad 132e, welches auf der dritten Achse 131c gelagert ist. Die Radien des ersten Zahnrades 132a, des zweiten Zahnrades 132b, des dritten Zahnrades 132c, des vierten Zahnrades 132d und des fünften Zahnrades 132e sind derart gewählt, dass eine stufenweise Untersetzung der Rotationsbewegung des ersten Zahnrades 132a erfolgt, so dass entsprechend einer maximal möglichen Längsverschiebung das fünfte Zahnrad 132e maximal eine volle Umdrehung, bevorzugt etwas weniger als eine volle Umdrehung, ausführt. Das erste Zahnrad 132a weist hierbei einen größeren Radius als das zweite Zahnrad 132b auf. Das zweite Zahnrad 132b weist ferner einen kleineren Radius als das dritte Zahnrad 132c auf. Das dritte Zahnrad 132c weist einen größeren Radius als das vierte Zahnrad 132d auf. Das vierte Zahnrad 132d weist einen kleineren Radius als das fünfte Zahnrad 132e auf.

Gemäß einer geringfügigen Abwandlung dieser Ausführungsform des erfindungsgemäßen Sitzlängseinstellers kann es ebenso vorgesehen sein, dass die Radien der ersten Steuerkurve 160 und der zweiten Steuerkurve 162 und entsprechend die Radien der Zahnräder 132a bis 132e derart angepasst sind, so dass eine Überschreitung eines Drehwinkelns von 360° der zweiten Steuerkurve 162 möglich ist. Hierbei ist es jedoch erforderlich, dass in diesem Zustand die erste Steuerkurve 160 einen Drehwinkel aufweist, welcher derart von einem ganzzahligen Vielfachen von 360° abweicht, dass die erste Steuerkurve 160 ein Einfallen des ersten Nockens 166 verhindert. Anders ausgedrückt, darf ein übereinstimmender Drehwinkel, der ersten Steuerkurve 160 und der zweiten Steuerkurve 162, nämlich einem ganzzahligen Vielfachen von 360°, ausschließlich in der gespeicherten Sitzlängsposition, bzw. dem Ausgangszustand auftreten.

Auf der zweiten Achse 131b ist vorliegend zwischen dem dritten Zahnrad 132c und dem vierten Zahnrad 132d eine erste Steuerkurve 160 angeordnet, welche bevorzugt über den Radius des vierten Zahnrades 132d hinausragt und entsprechend mit einem ersten Nocken 166 des Betätigungsarmes 124 zusammenwirkt. Die erste Steuerkurve 160 ist mit dem dritten Zahnrad 132c und dem vierten Zahnrad 132d unmittelbar oder mittelbar über die zweite Achse 131b drehfest verbunden. Ferner ist auf der dritten Achse 131c zusammen mit dem fünften Zahnrad 132e eine zweite Steuerkurve 162 angeordnet, welche mit einem zweiten Nocken 168 des Betätigungsarms 124 zusammenwirkt. Die zweite Steuerkurve 162 ist mit dem fünften Zahnrad 132e unmittelbar oder mittelbar über die dritte Achse 131c drehfest verbunden.

Die zweite Achse 131b, die dritte Achse 131c sowie die vierte Achse 131d sind in vorgesehenen Lagerungen im Gehäuse 26 der Memory-Vorrichtung 122, bevorzugt an beiden Endabschnitten von Lagerstiften 170, gelagert. Die erste Achse 131a ist an einem Ende einer Schwinge 136 fliegend gelagert, welche wiederum auf der zweiten Achse 131b gelagert ist. Die Schwinge 136 ist weiter mit einer Zugstange 38 verbunden, welche dazu dient, eine Längseinstellung des Fahrzeugsitzes 1 in eine neue zu speichernde Sitzlängsposition zu ermöglichen. Dies erfolgt dadurch, dass die Zugstange 38 die Schwinge 136 um die zweite Achse 131b verschwenkt und hierbei das erst Zahnrad 132a von der Zahnstange 28 abgehoben wird. Aufgrund des verlorenen Kontakts zwischen erstem Zahnrad 132a und Zahnstange 28 kann die Memory-Vorrichtung 122 keine Längsverschiebung mehr erfassen. Dies ist erst wieder der Fall, wenn die Zugstange 38 und dementsprechend das erste Zahnrad 132a abgesenkt werden. Eine Betätigung der Zugstange 38 ist bevorzugt mittels eines bekannten Sitzlängsverstell-Mechanismus realisiert. Ferner ist zur Bereitstellung einer sogenannten Reset-Funktion, mittels welcher das Getriebe 130 wieder in den Ausgangszustand bringbar ist, eine nicht dargestellte Reset-Feder vorgesehen. Die Reset-Feder greift hierzu beispielsweise an einem der Zahnräder 132a bis 132e, vorzugsweise an einem der Zahnräder 132a, 132c, 132e, an und dreht das Getriebe 130, sowie die mit dem Getriebe 130 verbundene erste Steuerkurve 160 und die zweite Steuerkurve 162 in die Stellung zurück, welche das Getriebe 130 und insbesondere die erste Steuerkurve 160 und die zweite Steuerkurve 162 in der gespeicherten Sitzlängsposition aufweisen. Die Reset-Feder kann beispielsweise in Form einer Spiralfeder ausgestaltet sein. Die Reset-Feder stützt sich bevorzugt zwischen einem zuvor genannten Zahnrad 132a bis 132e und an einem gehäusefesten Abschnitt ab. Die Reset-Feder wird bevorzugt bei einem Verschieben der ersten Sitzschiene 2 von der Drehung des entsprechenden Zahnrades 132a bis 132e vorgespannt. Wenn das Getriebe 130 durch Anheben des ersten Zahnrades 132a mittels der Zugstange 38 außer Eingriff mit der Zahnstange 28 in den Freilauf gebracht wird, bewirkt ein Entspannen der vorgespannten Reset-Feder ein Rückstellen des Getriebes 130, anders ausgedrückt bewirkt es einen Reset des Getriebes 130.

Weiterhin bewirkt ein Betätigen der Zugstange 38, zusammen mit dem Verschwenken der Schwinge 136, eine Drehung der ersten Steuerkurve 160 um die zweite Achse 131b, wodurch die erste Steuerkurve 160 auf den kooperierenden ersten Nocken 166 des Betätigungsarms 124 wirkt, so dass der Betätigungsarm 124 mit seinem dem Sperrelement 14 zugewandten freien Ende nach unten verschwenkt und das Sperrelement 14 entsprechend in die Freigabestellung bewegt wird.

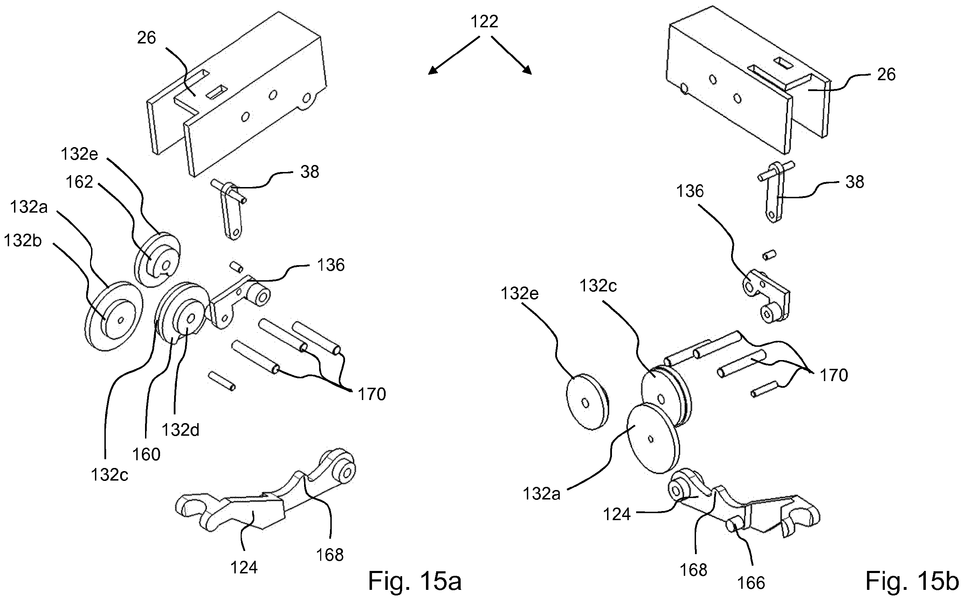

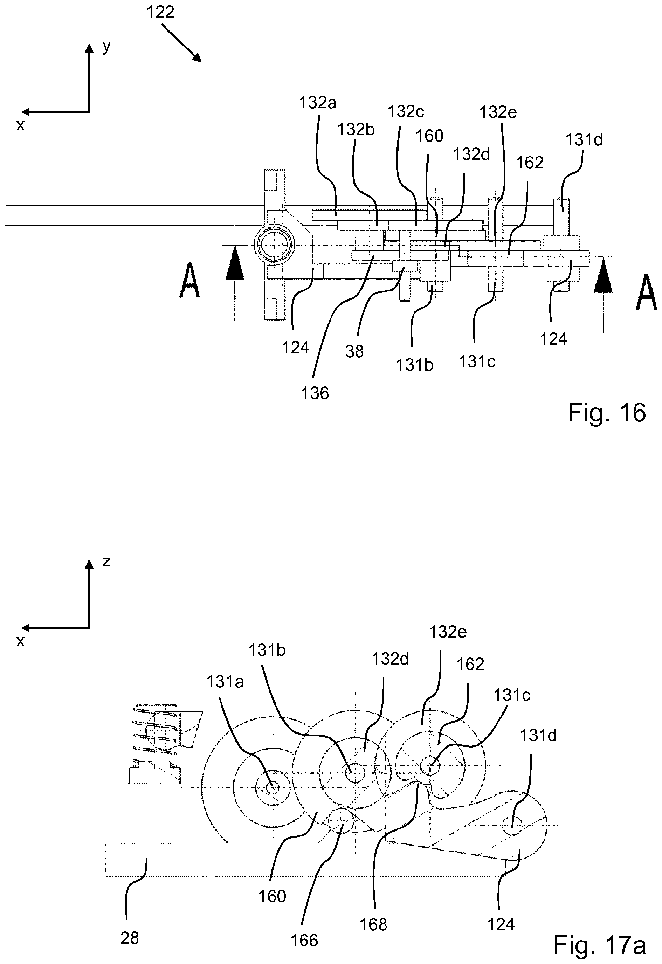

In den Figuren 15a und 15b sind weiter zwei perspektivische Ansichten einer Explosionsdarstellung des Getriebes 130 der Memory-Vorrichtung 122 von Fig. 10 aus unterschiedlichen Blickwinkeln dargestellt. Ergänzend zu der vorherigen Beschreibung der unterschiedlichen Bestandteile der Memory-Vorrichtung 122 sei nunmehr ergänzend erläutert, dass die zweite Steuerkurve 162 scheibenförmig ausgestaltet ist und im Bereich ihrer äußeren Umfangsfläche eine Kontur aufweist, welche mit einem vorliegend in Vertikalrichtung z aus dem Betätigungsarm 124 hervorstehenden zweiten Nocken 168 in Wechselwirkung steht, derart, dass der Betätigungsarm 124 von der zweiten Steuerkurve 162 in einer Schwenkbewegung um die vierte Achse 131d zum Betätigen des Sperrelement 14 antreibbar ist. Der Betätigungsarm 124 wird zur Betätigung des Sperrelements 14 zudem von der, auf den seitlich am Betätigungsarm 124 angeordneten erste Nocken 166 wirkenden, ersten Steuerkurve 160 angetrieben. Aufgrund der relativ zur Längsverschiebung schnelleren Drehung der auf der zweiten Achse 131b angeordneten ersten Steuerkurve 160 übernimmt diese im Wesentlichen die Aufgabe das Sperrelement 124 mittels des Betätigungsarms 124 in die Freigabestellung zu treiben, während der zweiten Steuerkurve 162 die Aufgabe zukommt, den Betätigungsarm 124 in der betätigenden Stellung zu halten. Dies wird nachfolgend anhand der Figuren 17a bis 17e näher erläutert.

Die Fig. 16 zeigt eine Ansicht von oben auf die Memory-Vorrichtung 122 von Fig. 10 und veranschaulicht im Wesentlichen den Verlauf der Schnittebene A-A deren Schnittansichten in den Figuren 17a bis 17e dargestellt sind.

Die Figuren 17a bis 17e zeigen Schnittdarstellungen durch die Memory-Vorrichtung 122 von Fig. 16 entlang der Schnittebene A-A, in verschiedenen Zuständen während des Verschiebens der ersten Sitzschiene 2 relativ zur zweiten Sitzschiene 4.

Die Darstellungen der verschiedenen Zustände untereinander vergleichend, ist in Fig. 17a zunächst zu erkennen, dass der erste Nocken 166 in eine Vertiefung der erste Steuerkurve 160 und der zweite Nocken 168 in eine Vertiefung der zweiten Steuerkurve 162 eingelassen ist. In diesem Ausgangszustand weisen die erste Steuerkurve 160 und auch die zweite Steuerkurve 162 einen übereinstimmenden Drehwinkel von 0° auf. Der Betätigungsarm 124 übt keine Kraft entgegen der Rückstellfeder 18 auf das Sperrelement 14 aus. Dies entspricht dem Ausgangszustand in der gespeicherten Sitzlängsposition ohne eine erfolge Längsverschiebung.

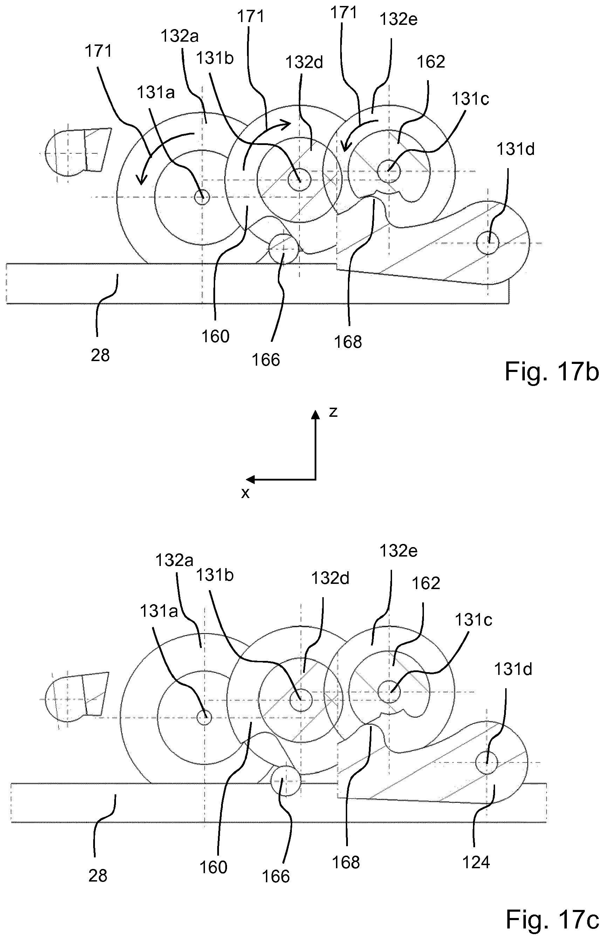

Bei einer nun beginnenden Längsverschiebung der ersten Sitzschiene 2 relativ zur zweiten Sitzschiene 4 und entsprechend der Memory-Vorrichtung 122 relativ zur Zahnstange 28 wird die Längsverschiebung in eine Drehbewegung aller Zahnräder 132a bis 132e des Getriebes 130 umgesetzt. Die bei einer Längsverschiebung von der gespeicherten Sitzlängsposition weg erzeugten Drehrichtungen der Zahnräder 132a bis 132e um die einzelnen Achsen sind in Fig. 17b anhand der Pfeile 171 eingezeichnet. Hierbei treibt die erste Steuerkurve 160den ersten Nocken 166 in einer im Wesentlichen nach unten gerichteten Bewegung aus der Vertiefung der ersten Steuerkurve 160 aus. Dies bewirkt eine Schwenkbewegung des Betätigungsarms 124 um die vierte Achse 131d. Dies wird ferner von der auf den zweiten Nocken 168 wirkenden Drehung der zweiten Steuerkurve 162 begünstigt, wie dies insbesondere im Verlauf von dem Zustand gemäß Fig. 17b zu Fig. 17c erkennbar ist. Die Drehung der ersten Steuerkurve 160 erfolgt hierbei, entsprechend der Untersetzung des Getriebes 130, mit einer höheren Winkelgeschwindigkeit als die Drehung der zweiten Steuerkurve 162.

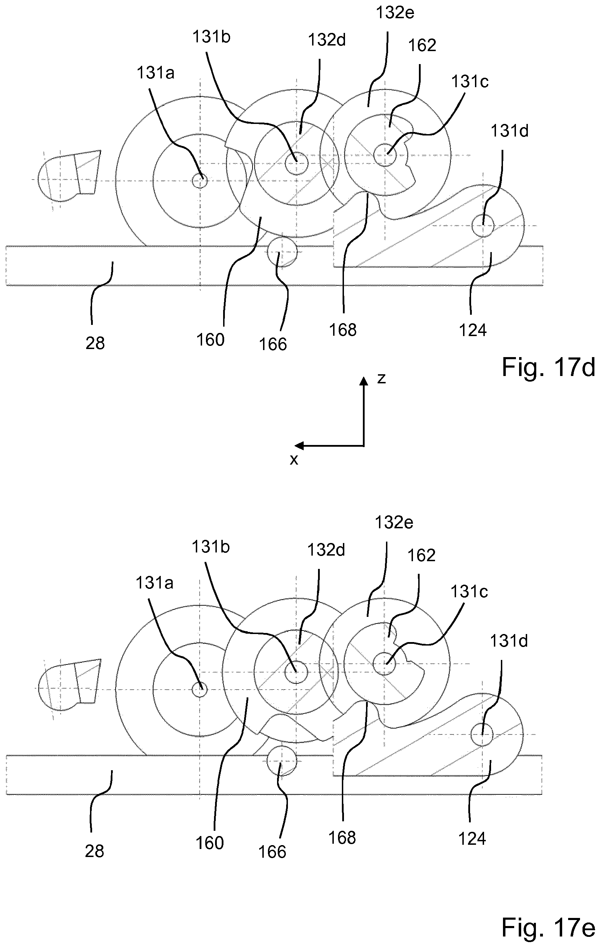

In dem Zustand gemäß Fig. 17d sind der erste Nocken 166 und der zweite Nocken 168 vollständig aus den Vertiefungen der ersten Steuerkurve 160 und der zweiten Steuerkurve 162 ausgetreten und der Betätigungsarm 124 hat das Sperrelement 14 vollständig in die Freigabestellung bewegt. Hierbei wird der Betätigungsarm 124 mittels der zweiten Steuerkurve 162 und des zweiten Nocken 168 in dieser Stellung gehalten. Erfolgt eine weitere Längsverschiebung und eine entsprechende weitere Rotation der ersten Steuerkurve 160, wie in Fig. 17e dargestellt, verliert der erste Nocken 166 den Kontakt zur ersten Steuerkurve 160 und der Betätigungsarm 124 wird lediglich über seinen Kontakt mittels des zweiten Nocken 168 zu der zweiten Steuerkurve 162 in der Stellung gehalten.

Erfolgt anschließend eine Längsverschiebung des Fahrzeugsitzes 1 zurück in Richtung der gespeicherten Sitzlängsposition, sind die zuvor beschriebenen Zustände und Bewegungsabfolgen in umgekehrter Reihenfolge zu betrachten. Die Drehrichtungen der Zahnräder gemäß Fig. 17b verlaufen dementsprechend ebenfalls in umgekehrter Drehrichtung. Wenn die gespeicherte Sitzlängsposition wieder erreicht wird, werden die Vertiefungen der ersten Steuerkurve 160 und der zweiten Steuerkurve 162 jeweils entsprechend in Richtung des ersten Nockens 166 und des zweiten Nockens 168 orientiert und die Kraft der Rückstellfeder 18 treibt hierbei das Sperrelement 14 in die Blockierstellung, bzw. in Eingriff mit der Verzahnung 8 der zweiten Sitzschiene 4, so dass die erste Sitzschiene 2 relativ zur zweiten Sitzschiene 4 nicht weiter verschoben werden kann. Gleichfalls bewirkt die Rückstellfeder 18 über das Sperrelement 14 ein Verschwenken des Betätigungsarms 124, so dass der erste Nocken 166 und der zweite Nocken 168 in die entsprechenden Vertiefungen der ersten Steuerkurve 160 und der zweiten Steuerkurve 162 eintreten.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren zusammen mit den Schutzansprüchen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 2: erste Sitzschiene
- 4: zweite Sitzschiene
- 6: Ausnehmung
- 8: Verzahnung
- 8a: gerundete Kontur
- 10: oberer Anschlag
- 12: unterer Anschlag
- 14: Sperrelement
- 16: Schräge
- 18: Rückstellfeder
- 20: Pfeil
- 22, 122: Memory-Vorrichtung
- 24, 124: Betätigungsarm
- 26: Gehäuse
- 28: Zahnstange
- 30, 130: Getriebe
- 31a, 131a: erste Achse
- 31b, 131b: zweite Achse
- 31c, 131c: dritte Achse
- 32a, 132a: erstes Zahnrad
- 32b, 132b: zweites Zahnrad
- 32c, 132c: drittes Zahnrad
- 32d, 132d: viertes Zahnrad
- 32e, 132e: fünftes Zahnrad
- 34: Mitnehmerscheibe
- 36, 136: Schwinge
- 38: Zugstange
- 40: Hebel
- 42: Kontur (des Betätigungsarms 24)
- 44: Kontur (der Mitnehmerscheibe 34)
- 46: Vorsprung (des Betätigungsarms 24)
- 48: Vorsprung (der Mitnehmerscheibe 34)
- 50: Ausnehmung (des fünften Zahnrads 32e)
- 52: Federelement

- 131d: vierte Achse
- 160: erste Steuerkurve
- 162: zweite Steuerkurve
- 166: erster Nocken
- 168: zweiter Nocken
- 170: Lagerstift
- 171: Pfeil

- x: Längsrichtung
- y: Querrichtung
- z: Vertikalrichtung

## Patentansprüche

1. Längseinsteller für einen Fahrzeugsitz (1) mit einer ersten Sitzschiene (2), einer zweiten Sitzschiene (4), relativ zu welcher die erste Sitzschiene (2) in Längsrichtung verschiebbar ist, und einer der ersten Sitzschiene (2) zugeordneten und mit der zweiten Sitzschiene (4) zusammenwirkenden Memory-Vorrichtung (22; 122), welche eine eingestellte Sitzlängsposition speichert, die durch eine vorgenommene Längsverschiebung des Fahrzeugsitzes (1) verlassen und wieder eingenommen wird, wobei die Memory-Vorrichtung (22; 122) ein mit der zweiten Sitzschiene (4) in Wirkverbindung bringbares Getriebe (30; 130) und ein relativ zu dem Getriebe (30; 130) beweglicher Betätigungsarm (24; 124) aufweist, wobei das Getriebe (30;130) spätestens bei Erreichen der gespeicherten Sitzlängsposition ein Steuermoment auf den Betätigungsarm (24; 124) ausübt, aufgrund dessen der Betätigungsarm (24; 124) wenigstens ein in der ersten Sitzschiene (2) geführtes, mit der zweiten Sitzschiene (4) zusammenwirkendes Sperrelement (14) ansteuert,
**dadurch gekennzeichnet, dass**
das Sperrelement (14) in einer Ausnehmung (6) in der ersten Sitzschiene (2) gelagert und geführt ist.

2. Längseinsteller gemäß Anspruch 1, wobei das Sperrelement (14) in seiner Bewegung in Vertikalrichtung z in der Ausnehmung (6) der ersten Sitzschiene (2) durch einen oberen Anschlag (10) und einen unteren Anschlag (12) begrenzt ist.

3. Längseinsteller gemäß einem der Ansprüche 1 bis 2, wobei sich das Sperrelement (14) mittels einer Rückstellfeder (18) an einem oberen Abschnitt der ersten Sitzschiene (2) abstützt.

4. Längseinsteller gemäß einem der Ansprüche 1 bis 3, wobei das Sperrelement (14) eine Schräge (16) aufweist.

5. Längseinsteller gemäß Anspruch 4, wobei die Schräge (16), im Falle einer Vorwärtsbewegung der ersten Sitzschiene (2) relativ zur zweiten Sitzschiene (4), mit einer bereichsweise abgerundeten Kontur (8a) der Verzahnung (8) zusammenwirkt.

6. Längseinsteller gemäß einem der Ansprüche 1 bis 5, wobei der Betätigungsarm (24) von unten her an dem Sperrelement (14) angreift und dieses in einer nach oben gerichteten Bewegung ansteuert.

7. Längseinsteller gemäß Anspruch 6, wobei die Rückstellfeder (18) als Druckfeder ausgestaltet ist, welche das Sperrelement (14) federbelastet in die Freigabestellung treibt.

8. Längseinsteller gemäß einem der Ansprüche 1 bis 7, wobei der Betätigungsarm (124) von oben her an dem Sperrelement (14) angreift und dieses in einer nach unten gerichteten Bewegung ansteuert.

9. Längseinsteller gemäß Anspruch 8, wobei die Rückstellfeder (18) als Zugfeder ausgestaltet ist, welche das Sperrelement (14) federbelastet in die Blockierstellung treibt.

10. Längseinsteller gemäß einem der Ansprüche 1 bis 9, wobei das Getriebe (30; 130) mit einer in einem Bodenbereich der zweiten Sitzschiene (4) angeordneten Zahnstange (28) zusammenwirkt.

11. Längseinsteller gemäß Anspruch 10, wobei ein erstes Zahnrad (32a; 132a) des Getriebes (30; 130) mit der Zahnstange (28) zusammenwirkt.

12. Fahrzeugsitz (1) aufweisend wenigstens einen Längseinsteller gemäß einem der vorhergehenden Ansprüche.

## Claims

1. Longitudinal adjuster for a vehicle seat (1), having a first seat rail (2), a second seat rail (4), relative to which the first seat rail (2) can be displaced in the longitudinal direction, and a memory device (22; 122) which is assigned to the first seat rail (2), interacts with the second seat rail (4) and stores a set seat longitudinal position which is left and assumed again by carrying out a longitudinal displacement of the vehicle seat (1), wherein the memory device (22; 122) has a mechanism (30; 130), which can be brought into operative connection with the second seat rail (4), and an actuating arm (24; 124) which can be moved relative to the mechanism (30; 130), wherein the mechanism (30; 130) exerts a control torque on the actuating arm (24; 124) at the latest when the stored seat longitudinal position is reached, by virtue of which control torque the actuating arm (24; 124) activates at least one blocking element (14) which is guided in the first seat rail (2) and interacts with the second seat rail (4),
**characterized in that**
the blocking element (14) is mounted and guided in a recess (6) in the first seat rail (2).

2. Longitudinal adjuster according to Claim 1, wherein the blocking element (14) is delimited in its movement in the vertical direction z in the recess (6) of the first seat rail (2) by an upper stop (10) and a lower stop (12).

3. Longitudinal adjuster according to either of Claims 1 and 2, wherein the blocking element (14) is supported by means of a resetting spring (18) on an upper portion of the first seat rail (2).

4. Longitudinal adjuster according to one of Claims 1 to 3, wherein the blocking element (14) has a bevel (16) .

5. Longitudinal adjuster according to Claim 4, wherein, in the case of a forward movement of the first seat rail (2) relative to the second seat rail (4), the bevel (16) interacts with a regionally rounded contour (8a) of the toothing (8).

6. Longitudinal adjuster according to one of Claims 1 to 5, wherein the actuating arm (24) engages on the blocking element (14) from below and activates it in an upwardly directed movement.

7. Longitudinal adjuster according to Claim 6, wherein the resetting spring (18) is designed as a compression spring, which drives the blocking element (14) in a spring-loaded manner into the release position.

8. Longitudinal adjuster according to one of Claims 1 to 7, wherein the actuating arm (124) engages on the blocking element (14) from above and activates it in a downwardly directed movement.

9. Longitudinal adjuster according to Claim 8, wherein the resetting spring (18) is designed as a tension spring, which drives the blocking element (14) in a spring-loaded manner into the blocking position.

10. Longitudinal adjuster according to one of Claims 1 to 9, wherein the mechanism (30; 130) interacts with a toothed rack (28) arranged in a base region of the second seat rail (4).

11. Longitudinal adjuster according to Claim 10, wherein a first toothed gear (32a; 132a) of the mechanism (30; 130) interacts with the toothed rack (28).

12. Vehicle seat (1) having at least one longitudinal adjuster according to one of the preceding claims.

## Revendications

1. Dispositif de réglage longitudinal pour un siège de véhicule (1) muni d'une première glissière de siège (2), d'une deuxième glissière de siège (4), par rapport à laquelle la première glissière de siège (2) peut être déplacée en direction longitudinale, et d'un dispositif de mémoire (22 ; 122) associé à la première glissière de siège (2) et coopérant avec la deuxième glissière de siège (4), qui met en mémoire une position longitudinale de siège réglée, qui est quittée puis à nouveau occupée lorsqu'un déplacement longitudinal du siège de véhicule (1) est réalisé, le dispositif de mémoire (22 ; 122) comprenant une transmission (30 ; 130) pouvant être amenée en liaison fonctionnelle avec la deuxième glissière de siège (4) et un bras d'actionnement (24 ; 124) mobile par rapport à la transmission (30 ; 130) ; au plus tard lorsque la position longitudinale de siège mise en mémoire est atteinte, la transmission (30 ; 130) exerçant sur le bras d'actionnement (24 ; 124) un couple de commande, sous l'effet duquel le bras d'actionnement (24 ; 124) commande au moins un élément de blocage (14) guidé dans la première glissière de siège (2), coopérant avec la deuxième glissière de siège (4),
**caractérisé en ce que**
l'élément de blocage (14) est monté et guidé dans un évidement (6) dans la première glissière de siège (2).

2. Dispositif de réglage longitudinal selon la revendication 1, dans lequel l'élément de blocage (14) est limité dans son mouvement en direction verticale z dans l'évidement (6) de la première glissière de siège (2) par une butée supérieure (10) et une butée inférieure (12).

3. Dispositif de réglage longitudinal selon l'une quelconque des revendications 1 à 2, dans lequel l'élément de blocage (14) s'appuie sur une section supérieure de la première glissière de siège (2) au moyen d'un ressort de rappel (18).

4. Dispositif de réglage longitudinal selon l'une quelconque des revendications 1 à 3, dans lequel l'élément de blocage (14) comprend un biais (16).

5. Dispositif de réglage longitudinal selon la revendication 4, dans lequel le biais (16), en cas d'un mouvement vers l'avant de la première glissière de siège (2) par rapport à la deuxième glissière de siège (4), coopère avec un contour (8a) arrondi en zones de la denture (8).

6. Dispositif de réglage longitudinal selon l'une quelconque des revendications 1 à 5, dans lequel le bras d'actionnement (24) entre en prise avec l'élément de blocage (14) par le bas et commande celui-ci dans un mouvement orienté vers le haut.

7. Dispositif de réglage longitudinal selon la revendication 6, dans lequel le ressort de rappel (18) est configuré sous la forme d'un ressort de pression, qui pousse l'élément de blocage (14) d'une manière sollicitée par ressort dans la position de libération.

8. Dispositif de réglage longitudinal selon l'une quelconque des revendications 1 à 7, dans lequel le bras d'actionnement (124) entre en prise avec l'élément de blocage (14) par le haut et commande celui-ci dans un mouvement orienté vers le bas.

9. Dispositif de réglage longitudinal selon la revendication 8, dans lequel le ressort de rappel (18) est conçu sous la forme d'un ressort de traction, qui pousse l'élément de blocage (14) d'une manière sollicitée par ressort dans la position de blocage.

10. Dispositif de réglage longitudinal selon l'une quelconque des revendications 1 à 9, dans lequel la transmission (30 ; 130) coopère avec une crémaillère (28) agencée dans une zone de fond de la deuxième glissière de siège (4).

11. Dispositif de réglage longitudinal selon la revendication 10, dans lequel une première roue dentée (32a ; 132a) de la transmission (30 ; 130) coopère avec la crémaillère (28).

12. Siège de véhicule (1) comprenant au moins un dispositif de réglage longitudinal selon l'une quelconque des revendications précédentes.
